# EUROPEAN PATENT APPLICATION

(11) **EP 4 538 122 A1**
(43) Date of publication of application: **16.04.2025**
(21) Application number: 24204507.8
(22) Date of filing: 03.10.2024
(51) Int. Cl.: B60R 16/037

(54) **ACCESSORY ELECTRONIC DEVICE FOR VEHICLES**

(30) Priority: 09.10.2023 IT 202300020919
(71) Applicant: Keyline S.p.A., 31015 Conegliano (TV) (IT)
(72) Inventor: Baratti, Luca, I-31010 Godega di Sant'Urbano (TV) (IT); Bianchi, Massimo, I-31012 Cappella Maggiore (TV) (IT); Bottega, Alberto, I-31020 San Fior (TV) (IT); BIAGI, Massimo, 31015 Conegliano (IT)
(74) Representative: De Bortoli, Eros

(57) **Abstract**

The invention relates to an electronic device for vehicles adapted to be installed on board a vehicle as an accessory device to allow a remote control of one or more auxiliary systems of said vehicle. The electronic device is adapted to communicate wirelessly in radio frequency with a vehicle key and is adapted to communicate with field devices on board said vehicle.

## Description

The present invention relates to an electronic device for vehicles. In particular, the present invention relates to an electronic device adapted to be installed on board a vehicle as an accessory device to allow to remotely control the operation of the vehicle's auxiliary systems by means of the vehicle key itself or the key of another vehicle.

As is known, some types of vehicles (for example some recreational vehicles, commercial vehicles, towing vehicles, and so on) include auxiliary systems of electrical (for example for lighting, heating/cooling, closing/opening doors, etc.) or mechanical nature (for example, for the movement of canopies, awnings, and other moving parts) that need to be managed differently by the vehicle user. In fact, such auxiliary systems are designed to carry out additional functions with respect to the normal road driving of the vehicle.

According to some prior art solutions, the vehicles provided with such auxiliary systems include a control panel installed on board, by means of which it is possible to control the operation of the systems of interest, possibly by means of a remote control.

The solutions of this type, while effectively carrying out the required tasks, may be uncomfortable for the user in certain circumstances. In fact, to control the operation of the auxiliary systems, the user must necessarily access the control panel or use a dedicated remote control.

In the case of towing vehicles (for example caravans or tent trailers), the control panel could be installed on board a towing vehicle. However, such a solution requires the introduction of considerable structural modifications to the towing vehicle and carrying out complex wiring operations to connect the control panel, on board the towing vehicle, with the auxiliary systems of the vehicle to be managed.

In light of the above issues, the need is strongly felt in the state of the art for novel solutions which allow for the simple and comfortable management of the auxiliary systems of a vehicle of the type mentioned above.

The present invention aims to respond to such a need by providing an electronic accessory device for vehicles, according to claim 1 and the related dependent claims proposed below. The electronic device, according to the invention, is adapted to be installed on board a vehicle as an accessory device to allow a remote control of one or more auxiliary systems of said vehicle.

The electronic device, according to the invention, is adapted to communicate wirelessly in radio frequency with a vehicle key and is adapted to communicate with field devices on board said vehicle.

The electronic device, according to the invention, is adapted to carry out a mapping procedure to acquire identification data of a vehicle key and to generate mapping data associating said key to a functionality executable by one or more auxiliary systems of the vehicle.

In operation, the electronic device, according to the invention, is adapted to execute a control procedure in response to receiving a radio frequency signal sent by a vehicle key operated by a user.

Such a control procedure comprises the following steps:
- recognising the key that sent the radio frequency signal. The recognition is performed based on key identification data stored in a memory medium and acquired during a key mapping procedure;
- if the key that sent the radio frequency signal is recognised, selecting mapping data relating to said key. Such mapping data is stored in a memory medium and was acquired during a key mapping procedure;
- generating control signals for one or more field devices on board said vehicle based on the selected mapping data.

Preferably, the recognition step of the key that sent the radio frequency signal, in response to which said control procedure is executed, comprises the following steps:
- decoding said radio frequency signal and extracting identification data of said key. Such identification data comprising at least one identification code of said key and a further identification code of a button of said key pressed by the user to emit such a radio frequency signal;
- comparing the key identification data thus obtained with corresponding identification data stored in memory and acquired through said mapping procedure.

Preferably, the aforesaid mapping procedure comprises the following steps:
- selecting address data indicative of a functionality performed by one or more auxiliary systems of said vehicle;
- receiving a radio frequency signal sent by a vehicle key to be mapped;
- decoding said radio frequency signal and extracting identification data of said key. Such identification data comprises at least one identification code of said key and a further identification code of a button of said key pressed by the user;
- generating mapping data related to said key by associating at least part of the identification data of said key with the selected address data.

The aforesaid mapping procedure can be advantageously executed cyclically for one or more buttons of said key.

Further characteristics and advantages of the present invention can be better perceived by referring to the description given below and to the attached figures, provided for purely illustrative and non-limiting purposes, in which:

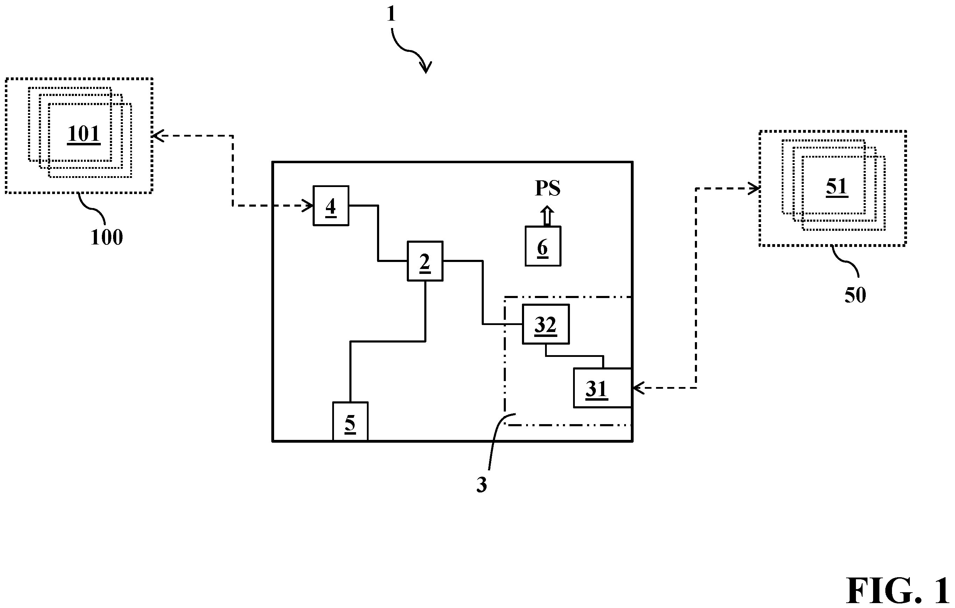

- Figure 1 schematically illustrates the electronic device, according to the invention;
- Figures 2-3 schematically illustrate the operation of the electronic device, according to the invention.

With reference to the aforementioned figures, the present invention relates to an electronic device 1 for vehicles.

The electronic device 1 is intended to be installed on board a vehicle 100. The latter may be, for example, a recreational vehicle (for example a camper, a caravan, a tent trailer, and so on), or a commercial vehicle (for example an autoshop, a van equipped for street trading, and so on) or a towing vehicle (for example an equipped trailer, a vehicle for agricultural use, and so on).

The vehicle 100 is provided with electrical or mechanical (or other) auxiliary systems intended to carry out accessory functions with respect to the road driving of the vehicle itself. Such auxiliary systems comprise one or more field devices 101 necessary to carry out the intended functions.

In principle, the field devices 101 can be of any type. For example, they can be actuator devices (for example electric motors) for the movement of moving parts of the vehicle, or switching units for turning on/off electrical parts of the vehicle, and so on.

In general, the vehicle 100 may be of a known type. Therefore, in the following, it will be described only in the aspects relevant to the invention, for obvious reasons of brevity.

The electronic device 1 can be installed on board the vehicle 100 as an accessory device, possibly in addition to a control unit (for example what is known as the ECU - Engine Control Unit) of the vehicle and, in some cases, also to a control panel of the auxiliary systems. When installed on board the vehicle, the electronic device 1 allows a user to remotely control the operation of the auxiliary systems of the vehicle 100 by means of the vehicle key itself or by means of the key of another vehicle, for example a vehicle intended to tow the vehicle 100. The electronic device 1 is adapted to communicate wirelessly in radio frequency with the key 50 of a vehicle, for example the vehicle 100 or another vehicle.

Preferably, the key 50 is what is a so-called *"smart key",* i.e., a key designed to interact in a wireless manner with the control system of the vehicle for which it was provided.

The key 50 can be of the toothed blade type to be inserted into a lock to start the engine or open the doors or of the remote control type.

The key 50 advantageously comprises one or more buttons 51. In the normal operation of the key, such buttons are adapted to allow a user to send control signals to the control system of the vehicle for which the key was provided, for example a door opening command, a boot opening command, and so on.

In general, the key 50 can be of known type. Therefore, in the following, it will be described only in the aspects relevant to the invention, for obvious reasons of brevity.

The electronic device 1 is adapted to communicate with one or more field devices 101 of the auxiliary systems on board the vehicle 100. As indicated above, the field devices 101 can be of various types. Regardless, they are provided with an appropriate communication interface. The communication between the electronic device 1 and the field devices 101 can occur in wireless or wired mode.

Preferably, the electronic device 1 comprises a control unit 2 which can advantageously include at least one digital data processing device, for example a microprocessor capable of executing appropriate software instructions stored on a memory medium.

Preferably, the electronic device 1 comprises a first communication module 3 operationally connected to the control unit 2.

The first communication module 3 is advantageously designed to communicate wirelessly in radio frequency with the key of a vehicle.

Preferably, the first communication module 3 comprises a radio antenna 31 operationally connected to a transceiver 32 (for example operating in UHF band at 315, 433 or 868 MHz). The transceiver 32 is, in turn, operationally connected to the control unit 2.

According to some embodiment variants of the invention, the first communication module 3 can be at least partially integrated in the control unit 2.

Preferably, the electronic device 1 comprises a second communication module 4 operationally connected to the control unit 2 and configured to communicate with the field devices 101 of the vehicle 100.

The second communication module 4 may advantageously comprise one or more communication ports for wireless proximity communications with the field devices 101. Such communication ports can be configured to implement communication protocols such as Wi-Fi^{™}, Bluetooth^{™}, Zigbee^{™}, Z-Wave^{™} or other proximity communication protocols.

In addition to or as an alternative to the aforesaid wireless communication ports, the second communication module 4 may advantageously comprise one or more wired communication ports with the field devices 101. Such communication ports may be electrically connected to field devices 101 on board the vehicle 100 by means of appropriate wiring and be configured to implement communication protocols such as Matter^{™}, Thread^{™}, RV-C^{™} or other field communication protocols.

Preferably, the electronic device 1 comprises a user interface module 5 operationally connected to the control unit 2 and configured to allow a user to exchange data and signals with the aforesaid control unit.

The user interface module 5 may comprise one or more manually operable control keys and/or a display, possibly of the "touchscreen" type.

Preferably, the electronic device 1 may comprise a power supply unit 6 configured to provide a power supply PS to the internal electronic components of the aforesaid electronic device. The power supply unit 6 may advantageously comprise a battery and a power control circuit configured to manage the operation of the aforesaid battery.

According to some embodiments, the power supply unit 6 is electrically connectable to a power source (for example a battery) on board the vehicle 100 to obtain the electrical energy necessary to power the electronic device.

As the person skilled in the art can readily understand, the electronic device 1 may advantageously comprise further electronic components or modules designed to carry out further tasks or functions which are not of interest within the scope of the present invention. Such parts of the electronic device will not be described here in detail for obvious reasons of brevity.

For example, the electronic device could be provided with a third communication module (not illustrated) operationally connected to the control unit 2 and configured to communicate with further field devices, for example sensors on board the vehicle 100.

As a further example, the electronic device could be provided with a fourth communication module (not illustrated) operationally connected to the control unit 2 and configured to communicate with a mobile computing device, for example a smartphone or a tablet provided with a special application.

According to the invention, the electronic device 2 is adapted to execute a mapping procedure 10 in order to acquire identification data of a vehicle key 50 and generate mapping data D_{M} which associate the aforesaid key with a functionality executable by the systems on board the vehicle 100.

As mentioned above, the key 50 being mapped may be the key of the vehicle 100 or the key of another vehicle, such as the key of a vehicle designed for towing the vehicle 100.

As will be clearer below, a key 50 subjected to the mapping procedure 10 can be used by the user to remotely control the operation of the vehicle's auxiliary systems.

The mapping procedure 10 is advantageously executed by the control unit 2, in cooperation with the first communication module 3. To this end, the control unit 2 is advantageously arranged to execute special software instructions stored on a memory medium.

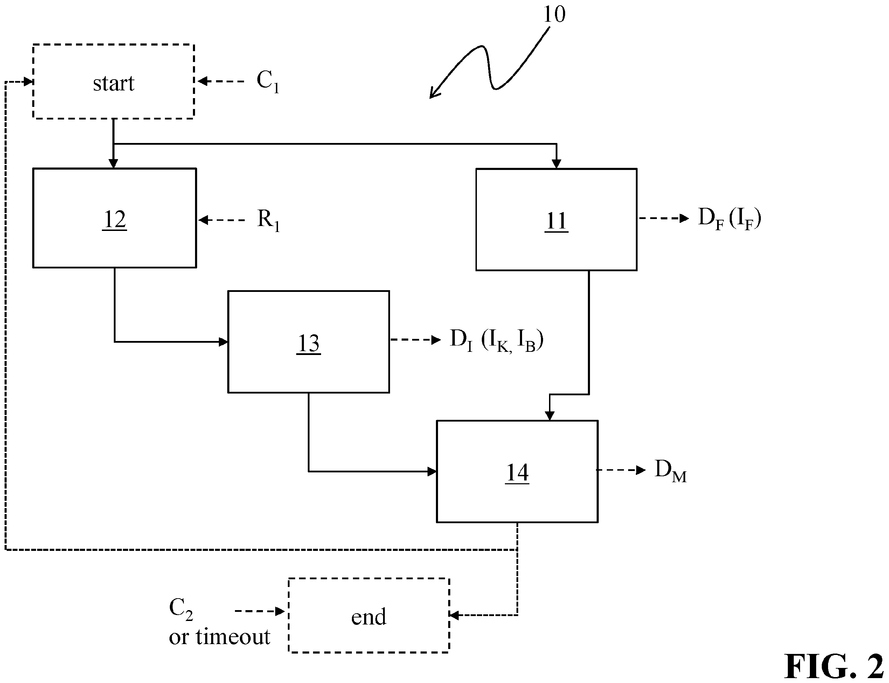

The mapping procedure 10, according to the invention, will now be described in more detail with reference to Figure 2.

Preferably, the mapping procedure 10 is activated in response to the reception of a user control signal C₁ sent to the control unit 2 by means of the user interface module 5. In practice, in response to the control signal C₁, the electronic device then switches from a *"normal"* operating mode to a *"learning"* mode, during which the mapping procedure is executed.

The user can thus advantageously establish when the electronic device must execute the mapping procedure.

The mapping procedure 10 comprises a step 11, in which the electronic device selects address data D_{F} of a functionality executable by the auxiliary systems of the vehicle 100 by means of one or more field devices 101 on board the vehicle itself.

The address data D_{F} data may advantageously include an address code I_{F} of any functionality of interest executable by the auxiliary systems of the vehicle 100. For example, if the vehicle 100 is a recreational vehicle, the address data D_{F} may comprise an identification code of the *"switch on lights"* functionality, or the *"open veranda"* functionality, or the *"close doors"* functionality, and so on.

The address data D_{F}, selectable during the mapping procedure, may include further information in addition to the address code I_{F} of a functionality, for example further address codes of the field devices 101 needed to execute the aforesaid functionality.

The address data D_{F}, selectable during the mapping procedure, are predefined and stored, for example in table form, in a memory medium of the control unit 2 of the electronic device. The selection step 11 of the address data D_{F} can be executed at the beginning of the mapping procedure 10 or in conjunction with another step of the procedure itself.

The mapping procedure 10 comprises a step 12, in which the electronic device receives a radio frequency signal R₁ sent by the key 50 of a vehicle to be mapped. The radio frequency signal R₁ received by the electronic device is emitted by the key 50 in response to the manual operation of one of its buttons 51 by the user. Obviously, it is advisable that key 50 is operated to emit such a radio frequency signal when the electronic device has already started to execute the mapping procedure 10.

The radio frequency signal Ri is received by the first communication module 3 which sends the data related to the received radio frequency signal to the control unit 2 for subsequent processing.

The mapping procedure 10 comprises a step 13, in which the electronic device decodes the received radio frequency signal R₁ and extracts the identification data D_{I} of the key 50 that transmitted such a signal.

The control unit 2 of the electronic device can advantageously obtain the identification data D_{I} of the key 50 by processing the data related to the radio frequency signal R₁ based on appropriate decryption and data extraction algorithms (which may be of known type). Preferably, the identification data D_{I} extracted during this step of the mapping procedure comprise an identification code I_{K} of the key 50 *("key code")* and a further identification code I_{B} of the button 51 of the key pressed by the user to transmit the radio frequency signal R₁ (*"button code"*)*.*

The extracted identification data D_{I} may however comprise further identification data of the key, for example what is known as a *"counter code"* of the key.

The mapping procedure 10 comprises a step 14, in which the electronic device generates mapping data D_{M} related to the key 50 which transmitted the radio frequency signal.

The mapping data D_{M} are advantageously configured to associate at least part of the identification data D_{I} extracted from the radio frequency signal R₁ with the selected address data D_{F}. In particular, the mapping data D_{M} associate at least the *key code* I_{K} and the *button code* I_{B} of the key 50 with the selected address data D_{F}, more precisely with the address code I_{F} of a functionality executable by the auxiliary systems of the vehicle 100. Such mapping data thus establish a unique relationship between the identification codes I_{K}, I_{B} of the key 50 and of the relative button 51 pressed by the user and an address code I_{F} related to a function executable by the auxiliary systems of the vehicle 100. This is evidently equivalent to establishing a unique relationship between a certain radio frequency signal R₁ transmitted by the key 50 and a certain functionality executable by the auxiliary systems of the vehicle 100.

The control unit 2 of the electronic device can advantageously obtain the mapping data D_{M} of the key by processing the selected address data D_{F} and the identification data D_{I} of the key based on appropriate data processing algorithms (which can be of known type).

The mapping data D_{M} thus obtained are advantageously stored in a memory medium of the control unit 2. As we will see better below, such data are advantageously used during the normal operation of the electronic device.

The step 14 of generating the mapping data D_{M} concludes the mapping procedure 10. The latter can be advantageously repeated cyclically, according to the methods described, for each button of the key 50 for which a mapping is to be performed.

Where this is not necessary, the electronic device may return to a normal operating mode in response to a further control signal sent by the user by means of the user interface module 5 or after a predefined time interval (*"timeout"*)*,* during which the electronic device does not receive any further radio frequency signals transmitted by the key 50.

The mapping procedure 10 described above may be advantageously employed to map a key 50 in order to use the aforesaid mapped key to remotely control the operation of the vehicle's auxiliary systems.

For greater clarity, it is reiterated that the mapped key 50 may be the key of the vehicle 100 on which the accessory electronic device is installed or the key of another vehicle, for example a vehicle designed to tow the vehicle 100.

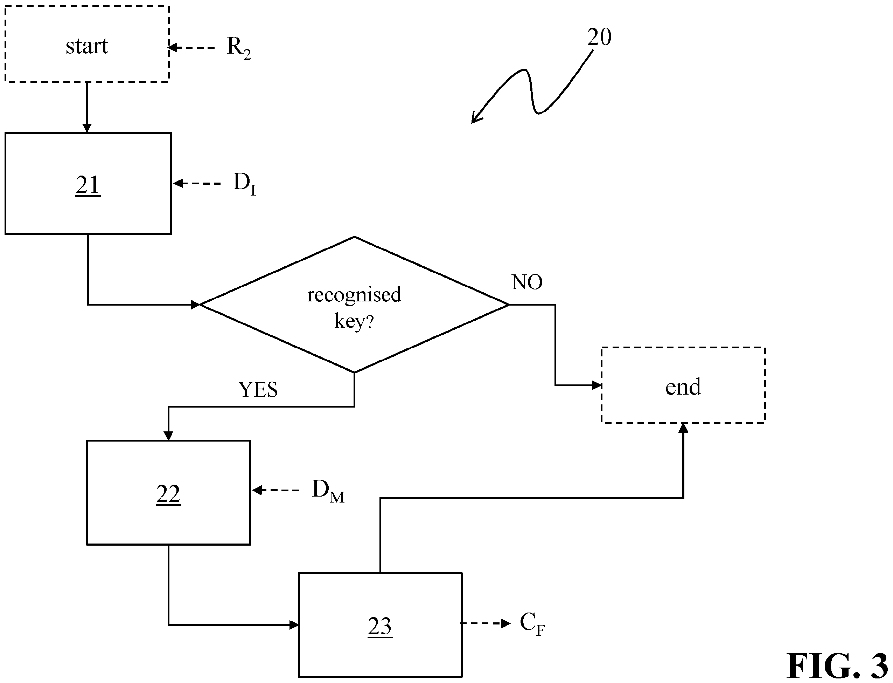

Figure 3 schematically illustrates a control procedure 20 of the operation of the auxiliary systems on board the vehicle 100 on which the accessory electronic device is installed.

The control procedure 20 is executed by the electronic device 1 during its normal operation, possibly also in conjunction with other functions or tasks which are not of interest for the purposes of the present invention.

In its normal operation, the electronic device generally operates in a *"listening"* mode where it waits to receive a radio frequency signal from a key. In response to receiving a radio frequency signal, sent by a vehicle key 50, the device executes the control procedure 20 described below. The control procedure 20 is advantageously executed by the control unit 2, in cooperation with the first communication module 3 and the second communication module 4. To this end, the control unit 2 is advantageously arranged to execute appropriate software instructions stored on a memory medium.

The control procedure 20 includes an initial step 21 in which the electronic device recognises the key 50 that sent the radio frequency signal.

To execute such a recognition operation, the electronic device decodes the received radio frequency signal and extracts the identification data of the key 50 that transmitted such a signal. The extracted identification data comprises at least the identification code of the key (*key code*) and the identification code of the button pressed by the user (*button code*)*.*

The control unit 2 of the electronic device can advantageously obtain the identification data of the key 50 that emitted the radio frequency signal R₂ according to methods similar to those described above for the mapping procedure.

To complete the recognition, the electronic device compares the extracted identification data with corresponding identification data D_{I} stored in memory and obtained executing the mapping procedure 10, described above.

In particular, the electronic device compares the *key code* and the *button code* of the key 50 that emitted the radio frequency signal R₂ with one or more *key codes* and one or more *button codes* stored in memory.

The comparison between the above-mentioned data can also be executed based on known data processing algorithms.

Thanks to the processing operations of the received radio frequency signal R₁, the electronic device is (or is not) able to identify the key 50 that emitted the radio frequency signal R₂ and the relative button 51 pressed by the user.

If the key 50 or the relative button 51 pressed by the user are not recognised, the control procedure 20 is terminated and the electronic device goes back into *listening* mode, waiting for a new radio frequency signal.

If the key 50 and the relative button 51 pressed by the user are recognised (since the relative identification data D_{I} are already present in memory), the control procedure 20 includes a step 22 in which the electronic device proceeds to select the mapping data D_{M} related to the key 50 which sent the radio frequency signal and to the relative button 51 pressed by the user.

Such mapping data are obviously generated by the electronic device by previously executing a mapping procedure 10 as already described.

Thanks to the recovery of the mapping data D_{M}, the electronic device is able to know which functionality must be executed by the auxiliary systems of the vehicle 100 and, consequently, which field devices 101 must be controlled to execute such a functionality.

The control procedure 20 therefore includes a step 23 in which the electronic device proceeds to generate control signals C_{F} for one or more field devices 101 on board the vehicle 100 based on the selected mapping data D_{M}. Such control signals are sent to the field devices 101 by means of the second communication module 4.

After sending the control signals C_{F} to the field devices 101, the control procedure 20 is completed and the electronic device goes back into *listening* mode, waiting for a new radio frequency signal.

It has been found in practice how the present invention offers numerous advantages with respect to the prior art solutions currently available.

From the above it is evident that the electronic device, according to the invention, when installed on board a vehicle, allows a user to remotely control the operation of the auxiliary systems of the aforesaid vehicle by means of any vehicle key previously subjected to the mapping procedure described above.

The vehicle's auxiliary systems can then be controlled remotely using the vehicle's own key or by means of the key of another vehicle, for example a vehicle designed to tow the aforesaid vehicle.

The electronic device, according to the invention, therefore, offers the user a simple and effective management mode of the auxiliary systems of a vehicle. Such systems can be controlled remotely without the need to access the control panel of such auxiliary systems or the need to use a dedicated remote control.

Thanks to these characteristics, the electronic device, according to the invention, is particularly suitable for use in recreational vehicles (in particular caravans), commercial vehicles (in particular equipped vans or autoshops) or equipped towing vehicles.

The electronic device is easy and quick to install on board a vehicle. As indicated above, it constitutes an accessory device that can be installed in addition to or in place of a control panel of the auxiliary systems. Furthermore, it can be installed on board vehicles provided with or lacking a control unit dedicated to controlling the vehicle's normal road driving functions. The electronic device, according to the invention, is relatively simple and inexpensive to manufacture at a practical level. It can be produced industrially using known electronic circuit manufacturing techniques.

## Claims

1. Electronic device (1) for vehicles,
wherein said electronic device is adapted to be installed on board a vehicle (100) as an accessory device to allow remote a control of one or more auxiliary systems of said vehicle,
**characterized in that** said electronic device (1) is adapted to communicate wirelessly in radio frequency with a vehicle key and is adapted to communicate with field devices (101) on board said vehicle (100),
wherein said electronic device is configured to carry out a mapping procedure (10) to acquire identification data (D_{I}) of a key (50) and generate mapping data (D_{M}) associating said key (50) to a functionality executable by one or more auxiliary systems of said vehicle (100),
wherein said electronic device is configured to perform a control procedure (20) in response to the reception of a radio frequency signal (R₂) sent from a vehicle key (50) operated by a user, said control procedure comprising the following steps:
- recognising (21) the key (50) that sent the radio frequency signal;
- if the key (50) that sent the radio frequency signal (R₂) is recognised, selecting (22) mapping data (D_{M}) relating to said key (50);
- generating (23) control signals for one or more field devices (101) on board said vehicle based on the selected mapping data (D_{M}).

2. Electronic device, according to claim 1, **characterized in that**, in said control procedure (20), the recognition step of the key (50), which sent the radio frequency signal (R₂), includes the following phases:
- decoding said radio frequency signal (R₂) and extracting identification data of said key (50), said identification data comprising at least an identification code of said key and a further identification code of a button of said key (51) pressed by the user;
- comparing the key identification data thus obtained with corresponding identification data (DI) stored in memory and acquired through said mapping procedure (10).

3. Electronic device, according to one of the previous claims, **characterized in that** said mapping procedure (10) includes the following phases:
- selecting (11) address data (D_{F}) indicative of a functionality performed by one or more auxiliary systems of said vehicle;
- receiving (12) a radio frequency signal (R1) sent by a vehicle key (50) to be mapped;
- decoding (13) said radio frequency signal and extracting identification data (D_{I}) of said key (50), said identification data comprising at least an identification code (I_{K}) of said key (50) and a further identification code (I_{B}) of a button (51) of said key pressed by the user;
- generating (14) mapping data (D_{M}) related to said key by associating at least part of the identification data (D_{I}) of said key with the selected address data (D_{F}).

4. Electronic device, according to claim 3, **characterized in that** said mapping procedure (10) is performed cyclically for one or more buttons (51) of said key (50).

5. Electronic device, according to one of the previous claims, **characterized in that** it comprises:
- a control unit (2) comprising means for processing data and signals;
- a first communication module (3) operationally connected to said control unit (2) and configured to communicate wirelessly in radio frequency with a vehicle key;
- a second communication module (4) operationally connected to said control unit (2) and configured to communicate with the field devices (101) of said vehicle.

6. Electronic device, according to claim 5, **characterized in that** said first communication module (3) comprises a radio antenna (31) operationally connected to a transceiver (32), in turn operationally connected to said control unit (2).

7. Electronic device, according to one of claims 5 to 6, **characterized in that** said second communication module (4) comprises one or more communication ports for wireless proximity communications.

8. Electronic device, according to one of claims 5 to 7, **characterized in that** said second communication module (4) includes one or more communication ports with wires.

9. Electronic device, according to one of claims 5 to 8, **characterized in that** it comprises a user interface module (5) operationally connected to said control unit (2) and configured to allow a user to exchange data and signals with said control module (10).

10. Electronic device, according to one of claims 5 to 9, **characterized in that** it comprises a power supply unit (6) of the internal electronic components of said electronic device, said power supply unit being electrically connectable to a power source on-board said vehicle (100).

11. Vehicle (100) **characterized in that** it includes an electronic device (1), according to one of the previous claims, installed on board.

12. Vehicle, according to claim 11, **characterized in that** it is a recreational vehicle, or a commercial vehicle, or a towing vehicle.
